# EUROPEAN PATENT APPLICATION

(11) **EP 1 542 186 A1**
(43) Date of publication of application: **15.06.2005**
(21) Application number: 03028458.2
(22) Date of filing: 12.12.2003
(51) Int. Cl.: G08B 15/00, H04N 7/18

(54) **Active searching and identifying system and method**

(71) Applicant: Chang, Chao-Hung, Taichung (TW)
(72) Inventor: Chang, Chao-Hung, Taichung (TW)
(74) Representative: Kaminski, Susanne, Dr.

(57) **Abstract**

A system and method for actively searching and identifying a target mainly includes a first image pick-up device for continuously taking wide-angle image signals within a predetermined coverage, and a processing unit connected with a databank, and the first and a second image pick-up devices for image identification to set any part in the wide-angle images matching a first feature image in the databank as a target to be enlarged, driving the second image pick-up device to take a closed up image, further identifying any part in the closed up image matching a second or a last feature image in the databank to decide the target being searched is found, and actuating a notifying unit.

## Description

### FIELD OF THE INVENTION

The present invention relates to a system and method for actively searching and identifying a target, and more specifically to a system and method that uses image identification techniques to find a specific target in a large picture and take closed up pictures of the target so as to have a clear and accurate identification of the target.

### BACKGROUND OF THE INVENTION

Conventional ways for searching for a wanted man, a stolen car, and many other specific targets typically include visual check and comparison of suspicious subjects with various recorded features. And, most of these features are presented as different images. For instance, when searching for a stolen car, data about the features of the stolen car may include the model, color, and license plate of the car, and a searching operator would usually check the color and the model of the car first. Only after a car met these prior features, further matching of the license plate would then be conducted. When the license plate of the car is found to match the recorded data, the car is identified as the stolen car. Thereafter, the found car is either pulled back for safekeeping or the car owner is notified to take back the car.

However, in the current rapidly developed computer and information industrial society, it is inefficient and costly to manually search at fixed points or among mobile cars and conduct the above-mentioned checking and comparison. Moreover, the accuracy of such manual check and comparison might be adversely affected due to tiredness or negligence of the checking operator. In addition, it is inevitable for the checking operator to idle or take a rest during the checking operation. Generally speaking, all these factors have adverse influences on the matching operation.

In recent years, some matured image identification techniques have been developed and widely employed in some specific applications in an attempt to solve the problems of high cost and low efficiency in manual searching and matching of a specific target. However, up to date, most of these recently developed image identification techniques are either used only in identification of a vehicle within a close distance and at a fixed place, or are passive types requiring immediate manual input of comparing data for matching, and fail to replace-the manual active searching and identifying of a specific target. In addition, many multiple purpose sensors must be provided as aids to provide various actuating signals and therefore increase setup and maintenance costs.

Mono-image-taken by the camera is used to do necessary enlargement for identification purpose. The taken image, no matter how many the pixels are, tends to become vague and uneasy to identify after being locally enlarged using digital processing. For example, when an image of a suspect recorded by a surveillance unit is locally enlarged to show the suspect's features, the enlarged image becomes too vague to be identified. Sometimes, empirical check and comparison by experienced persons is needed to solve the problem in identifying enlarged and vague image. Therefore, it is difficult for currently available automatic image identification techniques to completely replace manual identification work.

It is true that some countries or organizations own powerful image enhancement techniques to enlarge and read an illegible or vague image. However, it is also true that not all countries in the world own such image enhancement techniques. Even if assistances from these advanced countries may be requested and obtained for handling image identification in some important cases, such assistances are not available for most cases involving interests of the general public.

It is therefore tried by the inventor to develop an active searching and identifying system and method adapted to actively select and take the clear images of a target for identification, so as to overcome the problems existed in the conventional image identification techniques.

### SUMMARY OF THE INVENTION

A primary object of the present invention is to provide an active searching and identifying system adapted to conduct step-by-step comparison of continuously taken wide-angle and closed up images with feature images of a target being searched and therefore provides highly accurate and efficient image identification.

Another object of the present invention is to provide a method for actively searching and identifying a target through step-by-step comparison of continuously taken wide-angle and closed up images with feature images of a target being searched and therefore provides highly accurate and efficient image identification.

To achieve the above-mentioned primary object, the active searching and identifying system of the present invention includes at least:
a databank for recording at least a first and a second feature image of a target to be searched for;
a first image pick-up device for continuously taking wide-angle images within a predetermined coverage;
a second image pick-up device for dynamically take closed up images; and
a processing unit electrically connected with the databank, and the first and the second image pick-up devices; the processing unit being adapted to conduct image identification and set any part in the wide-angle images matching the first feature image as a target to be enlarged, drive the second image pick-up device to take a closed up image of the target to be enlarged and identify any part in the closed up image matching the second feature image, and decide the target being searched is found and simultaneously actuate a notifying unit.

To achieve the above-mentioned second object, the method for actively searching and identifying a target according to the present invention includes at least the following steps:
a. Providing a databank for recording at least a first and a second feature image of the target to be searched for;
b. Using a first image pick-up device to continuously take wide-angle images within a predetermined coverage;
c. Using a processing unit to conduct image identification, so that any-part in the wide-angle images match-the first feature image is set as a target to be enlarged;
d. Using a second image pick-up device to take a closed up image of the target to be enlarged;
e. Using the processing unit to identify any part in the closed up image matching the second feature image and thereby decide that the target being searched has been found; and
f. Actuating a notifying unit to notify related persons of the found target.

The number of feature images of the target being searched may be different depending on the nature of the target being searched. When there are more than two feature images of the target, the active searching and identifying system of the present invention may includes at least:
a databank for recording a plurality of feature images of a target to be searched for;
a first image pick-up device for continuously taking wide-angle images within a predetermined coverage;
a second image pick-up device for dynamically take closed up images; and
a processing unit electrically connected with the databank, and the first and the second image pick-up devices; the processing unit being adapted to conduct image identification and drive the second image pick-up device to take a closed up image of any part in the wide-angle images matching a first one of the feature images, and then sequentially identify and take closed up images of the part that matches other feature images until any part of a last closed up image is identified as matching the last one of the feature images, and decide that the target being searched has been found and simultaneously actuate a notifying unit.

Similarly, when there are more than two feature images of the target being searched, the method for actively searching and identifying a target according to the present invention may includes the following steps:
a. Providing a databank for recording a plurality of feature images of the target to be searched for;
b. Using a first image pick-up device to continuously taking wide-angle images within a predetermined coverage;
c. Using a processing unit to conduct image identification, so that any part in the wide-angle images matching a first one of the feature images is set as a target to be enlarged;
d. Using a second image pick-up device to take a closed up image of the target to be enlarged;
e. Using said processing unit to sequentially identify and take closed up images, which having any part matching another one of the feature images until any part of a last closed up image is identified as matching the last one of the feature images and thereby decide that the target being searched has been found; and
f . Actuating a notifying unit to notify related persons of the found target.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a block diagram of an active searching and identifying system according to the present invention;
Fig. 2 schematically shows the operation of a movable telecamera employed in the present invention;
Fig. 3 is a perspective view of Fig. 2;
Fig. 4 schematically shows the use of a first image pick-up device included in the present invention to take a wide-angle image;
Fig. 5 schematically shows the use of a second image pick-up device included in the present invention to take a closed up image of the identified target; and
Fig. 6 schematically shows the use of a second image pick-up device included in the present invention to take a further closed up image of the identified target.

### DETAILED DESCRIPTION OF THE PREFERRED EMBODIMENTS

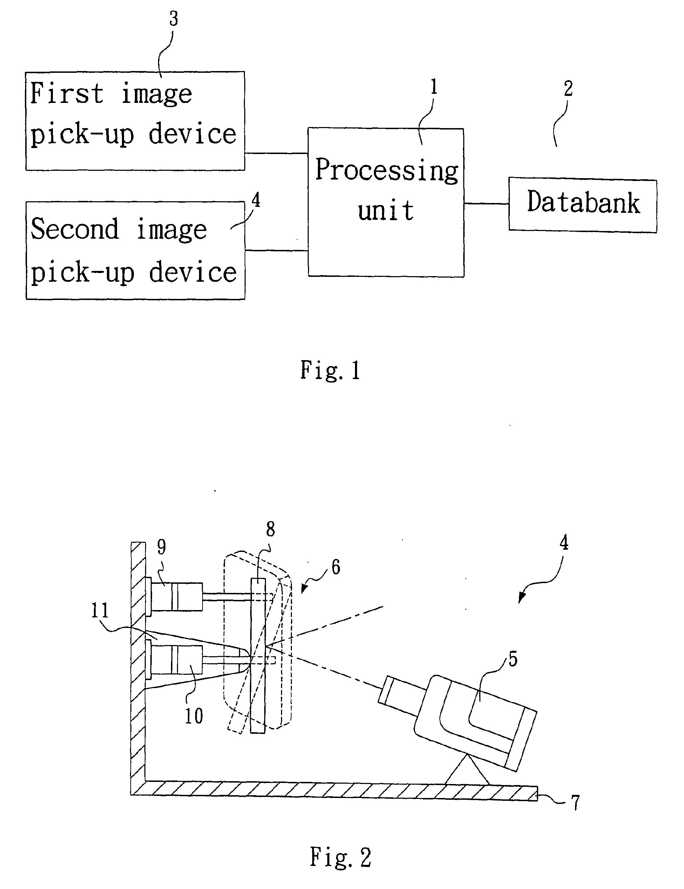

Please refer to Fig. 1 that is a block diagram of an active searching and identifying system according to the present invention. As shown, the active searching and identifying system mainly includes at least a processing unit 1, a databank 2, a first image pick-up device 3, and a second image puck-up device 4.

The databank 2 may be built in a hard disk, memory, or other recording medium of, for example, a computer, a server, or other similar electronic apparatus for recording first, second, and third feature images of a target to be searched. In the illustrated embodiment, the active searching and identifying system of the present invention is used to assist the police in searching for a stolen car. Therefore, the first feature may be, for example, the model and color of the stolen car, the second feature may be, for example, the configuration of license plate of the stolen car, and the third feature may be, for example, the numbers shown on the license plate. It is understood that it is also possible for the databank 2 to selectively record more other feature images. That is, in the present invention, the databank 2 is not limited to record only three feature images, and is not limited to record feature images of only one target to be searched for. Moreover, the databank 2 may be updated at any time or increase feature images of more targets to be searched for.

The first image pick-up device 3 is used to continuously take wide-angle images within a camera coverage of the device 3, and may be a fixed wide-angle camera; and the second image pick-up device 4 is used to dynamically take closed up images, and may be a movable telecamera. The second image pick-up device 4 is under the control of the processing unit 1 to take closed up images of an object that is set as a target to be enlarged. Since the fixed wide-angle camera is a known art, it is not discussed in details herein. In the illustrated embodiment, only one first and one second image pick-up devices 3, 4 are used to take images, but it is understood the number of the first and of the second image pick-up devices 3, 4 is not limited to one. For example, there may be a plurality of the second image pick-up devices 4 to correspond to a plurality of feature images recorded in the databank 2, or to meet the need when multiple objects close to the target being searched appear at the same time. Or, in a simplified system, the first and the second image pick-up devices 3, 4 can be combined as only one camera with powered zoom lenses, function as wide-angle camera as well as telecamera in time intervals.

Since the second image pick-up device 4 must be panned, tilted, and used to take closed up images, it must be a movable telecamera. A conventional movable telecamera typically includes a telecamera mounted on a universal base and controlled by a precision driving mechanism, and is therefore bulky, heavy, and expensive, and requires additional maintenance and repair costs after having been used over a period of time and becoming worn out. Unlike the conventional movable telecamera, the movable telecamera for the second image pick-up device 4 of the present invention is convenient and economical for use.

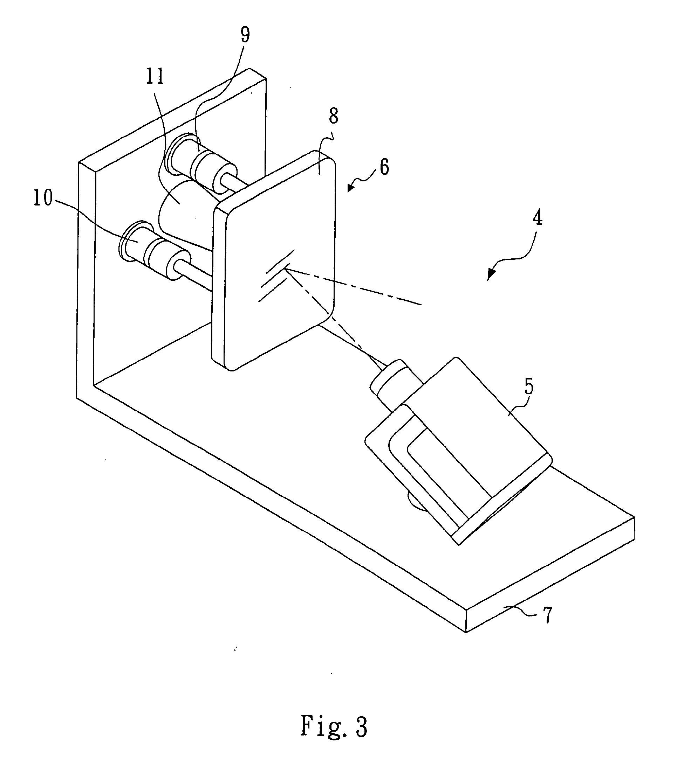

Please refer to Fig. 2. The second image pick-up device 4 includes a fixed telecamera 5 and a movable reflection unit 6 located in front of the fixed telecamera 5. Please refer to Figs. 2 and 3 at the same time. The movable reflection unit 6 includes abase 7, a reflection mirror 8, a vertical driving gear 9, and a horizontal driving gear 10. The reflection mirror 8 is connected to the base 7 via a turnable supporting point 11 provided at a rear side of the reflection mirror 8. The vertical driving gear 9 and the horizontal driving gear 10 are fixed on the base 7 to locate at an outer periphery of the supporting point 11 to contain an angle of 90 degrees between them. However, it is understood the angle contained between the vertical and the horizontal driving gear 9, 10 is not necessarily limited to 90 degrees but may be any angle smaller than 180 degrees and larger than zero degree. Front ends of the vertical and the horizontal driving gear 9, 10 are connected to predetermined points on the rear side of the reflection mirror 8. With these arrangements, the reflection mirror 8 may be deflected to different reflection angles via control of the vertical and the horizontal driving gear 9, 10, so as to change shooting angle for the fixed telecamera 5 to take images. With these arrangements, it is possible to quickly and accurately change and adjust the angles of taken images simply by adjusting angles between the reflection mirror 8 and the fixed telecamera 5. Moreover, since the movable reflection unit 6 is separated from the fixed telecamera 5, and has simple structure, small volume, low weight, and reduced cost, it is possible to reduce not only an overall cost of the movable telecamera but also the additional maintenance and repair costs thereof.

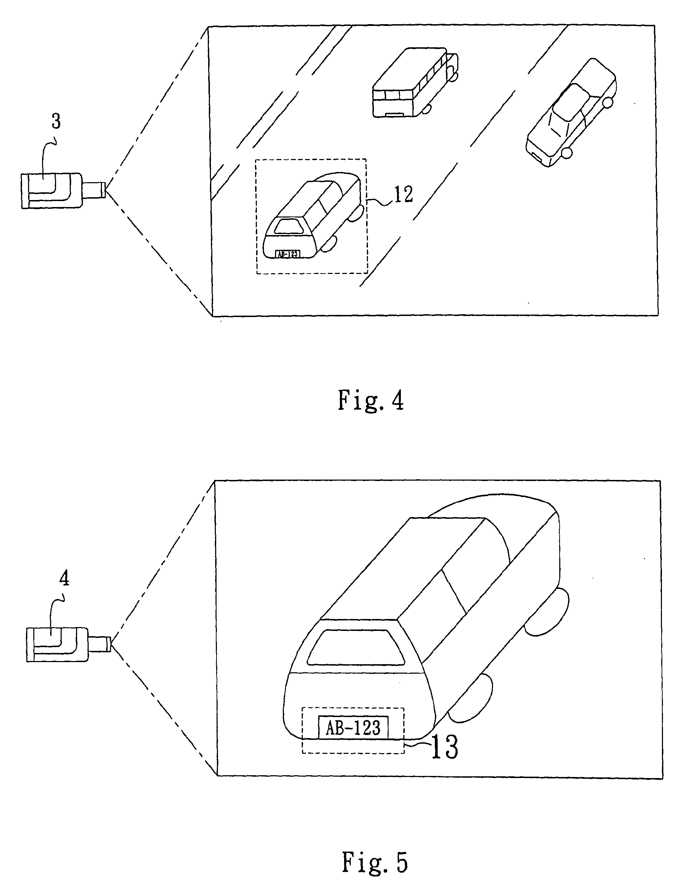

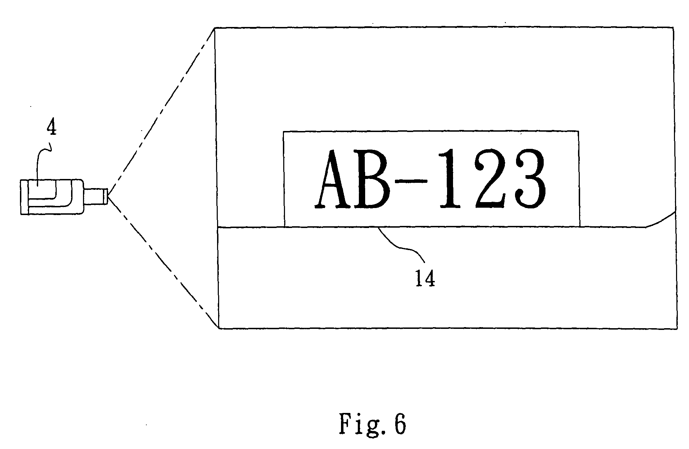

The processing unit 1 is electrically connected to the databank 2, the first image pick-up device 3, and the second image pick-up device 4, and may be a computer, a server, a processor having internal processing programs, or other electronic apparatus having data processing capability. The processing unit 1 receives images from the first and the second image pick-up devices 3, 4, controls the angle movements of the second image pick-up device 4, and conducts image identification by comparing the taken images with the feature images in the databank 2. In the illustrated embodiment, the processing unit 1 would first identify the wide-angle images continuously taken by the first image pick-up device 3. When any specific part 12 appeared in the wide-angle images matches the first feature image, such as a model of the stolen car being searched, as shown in Fig. 4, the specific part 12 is set as a target to be enlarged, and the second image pick-up device 4 is driven to take a closed up image of the target 12. Thereafter, the closed up image of the target 12 is further checked so as to find any other part 13 thereof that matches the second feature image, such as a specific license plate configuration 13. When the license plate configuration 13 matches the second feature image, it is further set as the target to be enlarged. Finally, a further closed up image of the target to be enlarged is compared with the third feature image. When the further closed up image matches the third feature image, such as numbers 14 shown on the license plate, as shown in Fig. 6, the specific part 12 is identified as the target being searched, that is, the stolen car. When the target being searched is located, a notifying unit (not shown) is simultaneously actuated to inform the police network to intercept and arrest the stolen car immediately.

The notifying unit varies with place at where the active searching and identifying system is installed. For example, when the active searching and identifying system is installed on a police car, the notifying unit may include an alarm bell that may be triggered immediately, and a display device that may display the numbers on the license plate, that is, the last closed up image, or display all identified images on split screens. The display device may also show the location of the target being searched, that is, the stolen car, for policemen on the police cars to quickly locate the real target being searched from different lanes to intercept and check the stolen car. Alternatively, when the active searching and identifying system is installed at a fixed position on a road, the notifying unit may include means for sending related information to a monitoring center of a local police network, or sending related information to corresponding systems installed on all police cars of the local police network, so that the policemen are notified of information about the model, the current position, and the moving direction of the stolen car through image, voice or other ways. There are many different manners in which the notifying unit may be implemented. The actual implementation of the notifying unit depends on the application of the present invention or the type of target being searched. Since the notifying unit belongs to a rear part function added to the active searching and identifying system, and is usually manually handled depending on actual need, it is not necessarily limited to the above-mentioned configurations.

The active searching and identifying system of the present invention may further include a display apparatus, such as a monitor, electrically connected to the processing unit 1 for displaying actual images of the wide-angle images and the closed up images that are identified as matching the feature images. It is also possible to use two monitors to separately show the wide-angle images and the closed up images to facilitate continuous tracking of the wide-angle images.

Moreover, it is also possible for the active searching and identifying system to include an operating interface, such as a keyboard, for setting targets to be searched for or the priority of targets to be searched for, and to set different functions, such as a still frame when the target being searched is found. However, functionsavailablefromtheoperatinginterfacedepend on the applications installed in the processing unit 1. Other functions, such as manual surveillance of the closed up images of a suspicious object, or inputting new files to the databank 2 or updating existing files in the databank 2, may be properly expanded.

Since images taken using the active searching and identifying system of the present invention might have dynamic changes due to different relative speeds, the wide-angle images continuously taken by the first image pick-up device 3 are used to overcome the problem of dynamic changes in the picked-up images. This is because the first image pick-up device 3 continuously takes the wide-angle images, and the part matching the first feature image would repeatedly appear in the continuous wide-angle images at different positions, therefore, it is possible to calculate the relative shift and relative speed through time difference of the picked-up images and position difference of the part matching the feature image. From the above calculation, it is able to derive a lead for the second image pick-up device 4 to change the angle for taking the images. Since the calculation of such dynamically taken images has been widely employed in image processing and tracking techniques and the formula or technique for such calculation are not the subject matters of the present invention, it is not discussed in details herein.

A method for actively searching and identifying a target, such as the above-mentioned stolen car, according to the present invention substantially includes the following steps:
a. Providing a databank 2. The databank 2 is used to record a first feature image, such as the car model, a 'second feature image, such as the license plate configuration, and a third feature image, such as the numbers shown on the license plate, of the target being searched;
b. Continuously taking wide-angle image signals by using a first image pick-up device 3, such as a fixed wide-angle camera, to continuously take wide-angle images in a fixed direction, as shown in Fig. 4, and sequentially sending the wide-angle images to a processing unit 1;
c. Identifying the wide angle images by using the processing unit 1 to compare the wide-angle images 12 with the first feature image recorded in the databank 2, and setting any specific part 12 that appears in the wide-angle images which matches the first feature image, such as a specific car model, as shown in Fig. 4, as a target to be enlarged;
d. Taking the closed up image of the target to be enlarged (that is, the car model 12) by driving a second image pick-up device 4 via the processing unit 1;
e. Identifying the closed up image by using the processing unit 1 to compare the closed up image with the second feature image recorded in the databank 2, and setting any specific part 13 that appears in the closed up images 12 (that is, the car model) and matches the second feature image, such as a specific license plate configuration, as shown in Fig. 5, as a target to be enlarged;
f. Taking the closed up image of the target to be enlarged (that is, the license plate configuration 13) by driving the same one or another second image pick-up device 4 via the processing unit 1;
g. Identifying the closed up image taken in the step "f" by using the processing unit 1 to compare the closed up image with the third feature image recorded in the databank 2, and deciding the target being searched is found when the closed up image 13 contains the third feature image, such as a specific number 14 shown in the license plate, as shown in Fig. 6; and
h. Simultaneously actuating a notifying unit when it is decided in the step "g" the target being searched is found, and showing the closed up images and/or the wide-angle images using a display device.

In the above steps, the comparison and the identification of the images are implemented through image identification programs installed in the processing unit 1. Since the digitalized image identification technique is a known skill, it is not discussed herein.

The active searching and identifying system and method according to the present invention is, of course, not limited to the illustrated embodiment for assisting in the police to track stolen cars. Furthermore, the present invention may be used to search for any object that may be identified according to specific features. For instance, the present invention may be employed to search for a particular person, such as a missing person or a wanted man, according to different features, including, for example, facial contour, distance between eyes, etc.

Moreover, in implementing the present invention, the number of image pick-up devices is not necessarily limited to two as described above. It is also possible to use only one image pick-up device, such as a movable zoom telecamera, to take wide-angle and closed up image signals in time intervals. In this case, the system might have the problem of some short breaks resulted from time difference, but it may still be satisfactory in some places, such as a parking lot, which has relatively small or slow changes. As can be easily understood, such changes are only resulted from the quantity of the image pick-up devices, and the employed system and method are almost the same as that disclosed above, therefore, no further description thereof is needed.

From the above descriptions, it is understood that the present invention employs a first and a second image pick-up devices, the processing unit, and the databank to enable active selection and enlargement of images of any target being searched, so as to provide clearer images showing more details for further image comparison and identification. Since every image for identification is clear and legible without becoming vague due to digital enlargement, the accuracy in image identification will be ensured. Moreover, since the image comparison is conducted step by step, an improved searching efficiency may be achieved. As compared with the conventional skills, the present invention clearly improves the accuracy and efficiency in identifying, and without the need of using additional sensor and/or advanced image identification apparatus. And, enables significantly reduced setup cost to facilitate the application of the present invention in different industries.

## Claims

1. An active searching and identifying system, comprising at least:
a databank for recording at least a first and a second feature images of a target to be searched for;
a first image pick-up device for continuously taking wide-angle images within a predetermined coverage;
a second image pick-up device for dynamically take closed up images of selected targets; and
a processing unit electrically connected with said databank, said first and said second image pick-up devices, said processing unit being adapted to conduct image identification and set any part in said wide-angle images matching said first feature image as a target to be enlarged, drive said second image pick-up device to take a closed up image of said target to be enlarged and identify any part in said closed up image matching said second feature image, and decide said target being searched is found and simultaneously actuate a notifying unit.

2. An active searching and identifying system, comprising at least:
a databank for recording a plurality of feature images of a target to be searched for;
a first image pick-up device for continuously taking wide-angle images within a predetermined coverage;
a second image pick-up device for dynamically take closed up images of selected targets; and
a processing unit electrically connected with said databank, said first and said second image pick-up devices, said processing unit being adapted to conduct image identification and drive said second image pick-up device to take a closed up image of any part in said wide-angle images matching a first one of said feature images, and then sequentially identify and take closed up images of other parts that match other said feature images until any part of a last closed up image is identified as matching the last one of said feature images, and decide said target being searched is found and simultaneously
actuate a notifying unit.

3. A method of actively searching and identifying a target, comprising the steps of:
a. Providing a databank for recording at least a first and a second feature images of said target to be searched for;
b. Using a first image pick-up device to continuously take wide-angle images within a predetermined coverage;
c. Using a processing unit to conduct image identification, so that any part in said wide-angle images matching said first feature image is set as a target to be enlarged;
d. Using a second image pick-up device to take a closed up image of said target to be enlarged;
e. Using said processing unit to identify any part in said closed up image matching said second feature image and thereby decide that said target being searched has been found; and
f. Actuating a notifying unit to notify related persons of the found target.

4. A method of actively searching and identifying a target, comprising the steps of:
a. Providing a databank for recording a plurality of feature images of said target to be searched for;
b. Using a first image pick-up device to continuously take wide-angle images within a predetermined coverage;
c. Using a processing unit to conduct image identification, so that any part in said wide-angle images matching a first one of said feature images is set as a target to be enlarged;
d. Using a second image pick-up device to take a closed up image of said target to be enlarged;
e. Using said processing unit to sequentially identify and take closed up images having any part matching another one of said feature images until any part of a last closed up image is identified as matching the last one of said feature images and thereby decide that said target being searched has been found; and
f. Actuating a notifying unit to notify related persons of the found target.
